# EUROPÄISCHE PATENTSCHRIFT

(11) **EP 3 843 972 B1**
(45) Veröffentlichungstag und Bekanntmachung des Hinweises auf die Patenterteilung: **14.10.2026**
(21) Anmeldenummer: 19768729.6
(22) Anmeldetag: 29.08.2019
(51) Int. Cl.: B29C 48/30, B29C 48/09, B29C 48/16, B29C 48/49, B29C 48/11, B29C 48/12, B29L 31/00, E06B 3/22

(54) **EXTRUSIONSVORRICHTUNG UND EXTRUSIONSVERFAHREN**
EXTRUSION DEVICE AND EXTRUSION METHOD
DISPOSITIF D'EXTRUSION ET PROCÉDÉ D'EXTRUSION

(30) Priorität: 29.08.2018 DE 102018214671
(43) Veröffentlichungstag der Anmeldung: 07.07.2021
(73) Patentinhaber: Exelliq Austria GmbH, 4542 Nußbach (AT)
(72) Erfinder: WEIERMAYER, Leopold, 4542 Nussbach (AT)
(74) Vertreter: Maikowski & Ninnemann Patentanwälte Partnerschaft mbB
(86) Internationale Anmeldenummer: PCT/EP2019/073089
(87) Internationale Veröffentlichungsnummer: WO 2020/043824

(56) Entgegenhaltungen:
- EP-A1- 3 167 968
- DE-A1- 4 337 832
- JP-A- 2016 041 497
- JP-A- H10 286 632
- KR-A- 20100 023 501
- US-A- 5 622 665
- US-A- 5 733 491
- US-A- 5 795 641
- US-A1- 2008 271 671
- US-B2- 7 147 449

## Beschreibung

Die vorliegende Erfindung betrifft eine Extrusionsvorrichtung mit den Merkmalen des Anspruchs 1 und ein Extrusionsverfahren mit den Merkmalen des Anspruchs 8.

Es ist bekannt, Extrusionsvorrichtungen mit Düsenanordnungen für die Coextrusion von mindestens zwei unterschiedlichen thermoplastischen Harzrezepturen, wie z.B. PVC-Hart-Rezepturen für die Herstellung von Profilen zu verwenden.

Eine relativ hochwertige PVC-Rezeptur wird dabei an den Sichtflächen und den hinsichtlich Bewitterung und Sonneneinstrahlung exponierten Stellen des Profils angeordnet. Eine relativ preiswerte Komponente bzw. Rezeptur wird für die übrigen Querschnittsbereiche des Profils eingesetzt.

Die preiswertere Komponente kann z.B. aus recyceltem Material, wie beispielsweise einem Regrind aus gemahlenen Profilen, bestehen oder eine eigene Rezeptur haben, bei der aus Kostengründen weniger Stabilisator und/oder mehr Kreide enthalten ist. Bei dieser preiswerteren Komponente werden bezüglich Farbe keine hohen Ansprüche gestellt, weil diese bei einem fertigen Profil ohnehin nicht einsehbar ist. Da diese preiswertere Komponente stets nur für die Innenbereiche des Profils bzw. für hinsichtlich Sonneneinstrahlung kaum exponierte Außenbereiche eingesetzt werden kann, wird diese auch "Kernmaterial" bezeichnet. Die hochwertige Rezeptur wird hingegen "Neumaterial" bezeichnet.

Da die Kosten für Regrind nur ca. 40% und jene für eine anspruchslosere Ersatzrezeptur nur ca. 80% im Vergleich zu einer hochwertigen Fensterrezeptur betragen, sind hohe Anteile der billigen Komponente erwünscht. Die technischen Grenzen sind durch die unbedingt einzuhaltenden Mindestanforderungen der Profile vorgegeben. Das betrifft zum einen die Festigkeitseigenschaften und die Bewitterungsbeständigkeit der Profile, zum andern das Aussehen wie Farbe und Oberflächenqualität.

Die einfachste Form der Coextrusion betrifft Profile, bei denen die Innenwände und im Falle von Rahmenprofilen auch die der Mauer zugewandte Außenwand bzw. bei Flügelprofilen die der Glasscheibe zugewandte Außenwand aus dem Kernmaterial gebildet werden. In diesem Fall beträgt bei Fensterhauptprofilen der Gewichtsanteil des Kernmaterials ca. 30 bis 40%.

Deutlich höher wird dieser Gewichtsanteil, wenn auch die beiden Sichtflächen und die zum Glas zugewandte Außenwand des Profils coextrudiert werden, d.h., die exponierte Außenschicht, ca. 1/3 der Gesamtwanddicke, wird vom witterungsbeständigen Neumaterial und die Innenschicht, also ca. 2/3 der Gesamtwanddicke, dieser Sichtflächen wird aus dem Kernmaterial gebildet. In diesem Fall beträgt bei Fensterhauptprofilen der Gewichtsanteil des Kernmaterials bis ca. 70%.

Dieser hohe Anteil an der billigen Komponente geht aber mit einem Nachteil beim Eckenschweißen einher. Profile, wie Fensterprofile werden zu rechteckigen Rahmen verschweißt, wobei die vier Rahmenschenkel zunächst auf Gehrung geschnitten werden. Beim Verschweißen werden die Gehrungsflächen auf ca. 220°C erhitzt, so dass die Profile hier erweichen. Anschließend werden die Gehrungsflächen gegeneinandergedrückt, d.h. verschweißt und abgekühlt. Dabei bildet sich ein Schweißwulst, welcher sowohl nach außen als auch nach innen ragt, da die Profile bei der Verschweißung um je ca. 1,5mm verkürzt werden. Dieser Schweißwulst wird dann entfernt, so dass eine leichte Schattenfuge ausgebildet wird. In dieser Schattenfuge darf das Kernmaterial nicht sichtbar sein, da Farbunterschiede visuell als störend empfunden werden und auch die Witterungsbeständigkeit vermindert wird, was nach langer Einsatzdauer durchaus zu Rissen im Eckbereich führen kann.

Vergleichbare Extrusionsvorrichtungen sind in den Dokumenten KR 2010 0023501 A, JP 2016 041497 A, US 5 733 491 A US 5 795 641 A, US 2008/271671 A1 und EP 3 167 958 A1 beschrieben.

Aufgabe der vorliegenden Erfindung ist es daher, eine Extrusionsvorrichtung bereitzustellen, die die Coextrusion eines komplexen PVC-Profils mit zwei Schichten aus zwei verschiedenen thermoplastischen Materialien, nämlich PVC, ermöglicht, wobei die äußere Schicht eine größere Dicke aufweisen kann als die innere Schicht.

Diese Aufgabe wird mit einer Extrusionsvorrichtung mit den Merkmalen des Anspruchs 1 gelöst.

Die Extrusionsvorrichtung dient der Coextrusion von PVC-Profilen mit mindestens zwei Hohlkammern, insbesondere Fensterprofilen. Dabei weist die Extrusionsvorrichtung eine Düsenvorrichtung mit mindestens einem ersten Fließkanal für ein erstes thermoplastisches Material und mindestens einem zweiten Fließkanal für ein zweites thermoplastisches Material auf. Bei den thermoplastischen Materialien handelt es sich um PVC-Materialien, die z.B. auf Grund unterschiedlicher Rezepturen unterschiedliche Eigenschaften haben können.

Dabei weist ein erster Fließkanal für Neumaterial eine Länge von mehr als der Hälfte der axialen Länge (gemessen in Extrusionsrichtung) der Düsenvorrichtung auf. Dabei kann die Länge insbesondere die axiale Länge sein, d.h. die Länge projiziert auf die Achse der Extrusionsrichtung. In jedem Fall soll sichergestellt werden, dass im Polymermaterial auf Grund der Länge der Fließgeschichte eine definierte Schervorgeschichte enthalten ist.

Der axiale Abstand der Zusammenführung der Fließkanäle vom Austritt des Profils beträgt weniger als 12% der axialen Länge der Düsenvorrichtung. Dies bedeutet, dass die Zusammenführung der Fließkanäle relativ nahe am Düsenaustritt angeordnet ist. Auch hier ergibt sich auf Grund des längeren Fließweges, dass die Wandstärkenquellung verglichen zur Längenquellung relativ verkleinert wird.

Die Fließkanäle sind bis zu einer Zusammenführung getrennt im Inneren der Düsenvorrichtung angeordnet. In Fließrichtung bilden die Fließkanäle nach der Zusammenführung einen gemeinsamen Fließkanal, der dann in einem Düsenaustritt an einer Stirnseite der Düsenvorrichtung mündet.

Die Zusammenführung der Fließkanäle ist dabei so ausgebildet ist, dass an dem Düsenaustritt des gemeinsamen Fließkanals aus der Düsenvorrichtung ein Verhältnis von Wandstärkenquellung zu Längenquellung von 1,01 bis 1,3, vorzugsweise 1,1 vorliegt. Die Wandstärkenquellung ist damit immer etwas größer als die Längenquellung.

Die Wandstärkenquellung ist definiert als das Verhältnis zwischen Wandstärke des Schubmusters zur Wandstärke des Profilmusters. Die Längenquellung ist definiert als das Verhältnis zwischen der Länge einzelner Wände am Schubmuster und der Länge dieser Wände am Profilmuster. Unter Schubmuster werden kurze Schmelzestücke, Länge ca. 20mm, verstanden, die während des Extrusionsvorganges mit einer breiten Spachtel an der Stirnfläche der Düsenvorrichtung abgestochen werden, noch bevor das Profil durch eine Kalibrierung geführt wird. Die Schmelzestücke werden bei Raumtemperatur luftgekühlt, damit diese aushärten. Im Vergleich dazu werden bei einem Profilmuster Stücke eines bereits durch die Kalibrierung geführten Profils abgesägt. Auch hier beträgt die Länge der Profilstücke ca. 20mm. Dies bedeutet, dass bei einem typischen PVC-Profilwerkzeug der Austrittsspalt der Düse im Durchschnitt immer kleiner ausgelegt ist als die zu erreichende Wandstärke am Profilmuster. Die Längen der Profilwände am Düsenaustritt werden im Durchschnitt wiederum immer größer ausgelegt als die zu erreichenden Längen am Profilmuster.

Die Wandstärken- und Längenquellungen hängen bei gleichen Kunststoffklassen (hier PVC) und rheologischen Randbedingungen im Wesentlichen von der Geometrie der Fließkanäle und der Zusammenführung der Fließkanäle ab. Damit charakterisiert das Verhältnis der Quellungen insbesondere auch die Geometrie und umgekehrt.

Auch werden in einer Ausführungsform der mindestens eine Fließkanal für das erste thermoplastische Material und der mindestens eine Fließkanal für das zweite thermoplastische Material in einem Abstand zwischen 20 bis 50 mm vor einer Düsenstirnfläche zu dem mindestens einen gemeinsamen Fließkanal zusammengeführt. Auch damit wird erreicht, dass die Fließkanäle eine hinreichende Länge haben.

Der mindestens eine erste Fließkanal für das erste thermoplastische Material an den ebenen Sichtflächen ist in einer Ausführungsform nicht durch Haltestege unterteilt. Oberflächeneffekte wie Glanzstreifen und Welligkeiten werden so vermieden.

Ferner ist in einer Ausführungsform der Düseneinlaufbereich mit mindestens einem Hauptextruder und einer Coextrusionvorrichtung verbunden.

In einer weiteren Ausführungsform beträgt die mittlere Neigung des ersten Fließkanals 31 zur Extrusionsrichtung zwischen 5 und 50°, insbesondere zwischen 10 und 25°. Auch hier geht es darum, dass sich eine definierte Schervorgeschichte im Fließkanal ausbilden kann.

Auch ist es möglich, dass die beiden thermoplastischen Materialien PVC-Materialien mit unterschiedlichen Zusammensetzungen sind.

In einer weiteren Ausführung ist die Spalthöhe des ersten Fließkanal (31) für Neumaterial im Bereich der Zusammenführung der beiden Fließkanäle an den Sichtflächen (8, 9) der Fensterprofile größer als die Spalthöhe des zweiten Fließkanals in diesem Bereich.

Die Aufgabe wird auch durch ein Extrusionsverfahren mit den Merkmalen des Anspruchs 9 gelöst. Dabei wird
- ein erstes thermoplastisches Material in mindestens einem Fließkanal in einer Düsenvorrichtung geführt; und
- ein zweites thermoplastisches Material in mindestens einem zweiten Fließkanal der Düsenanordnung geführt,
- wobei das erste thermoplastische Material aus dem mindestens einen ersten Fließkanal und das zweite thermoplastische Material aus dem mindestens einen zweiten Fließkanal an einer Zusammenführung in einen gemeinsamen Fließkanal zusammengeführt werden, so dass das aus der Düsenanordnung austretende Profil Schichten des ersten thermoplastischen Materials und des zweiten thermoplastischen Materials aufweist, und
- in einem ersten Fließkanal für Neumaterial das Neumaterial über eine Länge, insbesondere axiale Länge der Fließkanäle, von mehr als der Hälfte der axialen Länge der Düsenvorrichtung geführt wird und eine Zusammenführung des in den Fließkanälen geführten Neumaterials weniger als 12% der axialen Länge der Düsenvorrichtung vom Austritt gemessen erfolgt. Damit erfolgt eine Zusammenführung der Schmelze relativ nahe am Austritt.

Dabei kann das erste thermoplastische Material und das zweite thermoplastische Material aus zwei unterschiedlichen Polyvinylchlorid (PVC)-Rezepturen bestehen.

In einer Ausführungsform weist das Profil am Austritt aus der Düsenvorrichtung eine Temperatur zwischen 190 und 210 °C auf. Der Druckabfall zum Austritt des Profils kann zwischen 250 und 450 bar, insbesondere zwischen 300 und 390 bar liegen. Und die Schmelzgeschwindigkeit der Polymerschmelze des Profils kann am Austritt zwischen 1 und 6m/min, insbesondere zwischen 2,5 und 5m/min, liegen.

In einer weiteren Ausführungsform wird auf Außenwände des Profils, d.h. auf Wände des Extrudats, die im Einbau der Sonne ausgesetzt sind, zumindest teilweise zwei Schichten aufgebracht werden, wobei die Dicke der äußeren Schicht an den Sichtflächen mindestens 50% der Gesamtwanddicke beträgt.

Auch kann am Düsenaustritt des gemeinsamen Fließkanals aus der Düsenvorrichtung ein Verhältnis von Wandstärkenquellung zu Längenquellung von 1,01 bis 1,3, insbesondere 1,1, vorliegen.

Im Folgenden wird die Erfindung anhand von Ausführungsbeispielen unter Bezugnahme auf die Figuren näher erläutert. Insbesondere werden anhand eines beispielhaften Fensterprofils die unterschiedlichen Düsenausführungen und die hierfür erforderliche Anordnung der Extruder anhand der Figuren beschrieben. Dabei zeigt
- Fig. 1: das Rahmenprofil in Coextrusionsausführung, drei Außenwände mit zwei Komponenten, wobei die Dicke der Außenschicht ca. 30% der Gesamtwanddicke beträgt;
- Fig. 2: das gleiche Rahmenprofil in Coextrusionsausführung, drei Außenwände bestehen aus zwei Komponenten, wobei die Dicke der Außenschicht der beiden Sichtflächen ca. 70% der Gesamtwanddicke beträgt;
- Fig. 3: Querschnitt der Schweißnaht nach dem Eckenschweißen, Profil nach Fig. 1 - ca. 30% der Gesamtschichtdicke bestehen aus dem Neumaterial;

- Fig. 4: Querschnitt der Schweißnaht nach dem Entfernen der Schweißwulst, Profil nach Fig. 1 - ca. 30% der Gesamtschichtdicke bestehen aus dem Neumaterial;
- Fig. 5: Querschnitt der Schweißnaht nach dem Entfernen des Schweißwulstes, Profil nach Fig. 2 - ca. 70% der Gesamtschichtdicke bestehen aus dem Neumaterial;
- Fig. 6: eine überblickartige Darstellung einer Ausführungsform eines Hauptextruders, einer Coextrusionsvorrichtung und einer Düsenvorrichtung;
- Fig. 6A: eine schematische Darstellung von Wandstärkenquellung und Längenquellung eines Profils am Austritt aus der Düsenvorrichtung;
- Fig. 7: einen Vertikalschnitt durch eine Ausführungsform einer Düsenvorrichtung zur Herstellung eines Profils nach Fig. 2;
- Fig. 8: eine Schnittansicht der Düsenvorrichtung nach Fig. 7 gegen die Extrusionsrichtung, Schnittführung A-B siehe Fig. 7;
- Fig. 9: eine Stirnansicht einer Ausführungsform der Düsen-Eingangsplatte der Düsenvorrichtung;
- Fig. 10: eine Stirnansicht einer weiteren Ausführungsform der Düsen-Eingangsplatte der Düsenvorrichtung;
- Fig. 11: eine drei-dimensionale Ansicht der Kanalführung in einem Extrusionswerkzeug;
- Fig. 12: ein Detail der Zusammenführung der zwei Fließkanäle:
- Fig. 13: eine Schnittansicht durch Kanäle für ein Extrusionsprofil;
- Fig. 14: eine Schnittansicht durch ein Extrusionsprofil mit zwei unterschiedlichen Schichten.

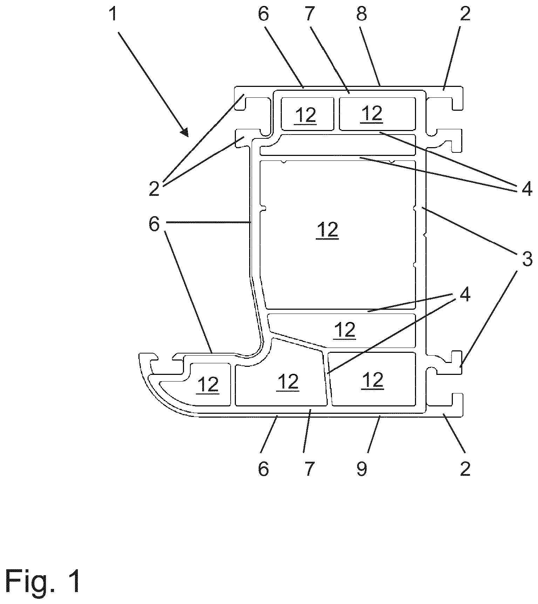

Fig. 1 zeigt im Querschnitt ein Profil 1 aus PVC, d.h. ein Fensterrahmenprofil mit mehr als zwei, hier acht, Hohlkammern 12 in Coextrusionsausführung, bei dem - verglichen mit Neumaterial - relativ viel kostengünstiges Kernmaterial, nämlich ca. 75%, verwendet wird.

Das Profil 1 weist zwei Sichtflächen 8, 9 auf: die beim eingebauten Fenster von außen und vom Rauminneren einsehbaren Außenwände des Profils 1.

Die drei Außenwände, welche erheblich mit dem Sonnenlicht in Kontakt kommen, weisen dabei mindestens teilweise zwei Schichten 6, 7 auf, d.h. eine Schicht 6 wird auf die andere Schicht 7 "coextrudiert". Die Dicke der äußeren Schicht 6 beträgt etwa 1/3 der Gesamtwanddicke, also ca. 0,7 bis 1,0mm, und besteht aus Neumaterial.

Die innere Schicht 7 besteht aus dem Kernmaterial. Einzelne Außenwände und kleinere Profilsegmente sowie die Innenwände sind bei diesem Profil 1 einschichtig aufgebaut. Beim eingebauten Fenster sind diese der Mauer zugewandt bzw. befinden sich im Inneren des Profils und sind daher nicht mehr einsehbar.

Wie sich bei Versuchen gezeigt hat, kann man bei dem für diese Profile 1 bewährten Coextrusionsvorrichtungen 22 die Dicke der äußeren Schicht 6 nicht beliebig vergrößern, also von 1/3 der Gesamtwanddicke auf z.B. 2/3 vergrößern.

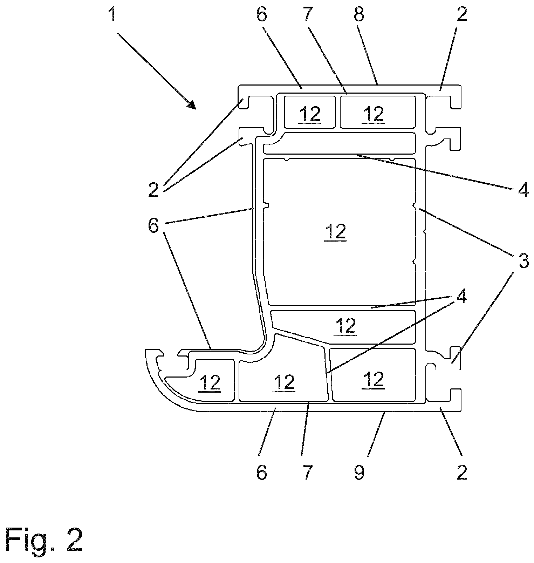

Fig. 2 zeigt ein Profil 1 gemäß Fig. 1, jedoch mit einem mittelhohen Anteil des Kernmaterials, nämlich ca. 60%.

Auch in diesem Fall sind die drei Außenwände, welche erheblich mit dem Sonnenlicht in Kontakt kommen, aus zwei Schichten 6, 7 aufgebaut, d.h. sie werden coextrudiert.

Der Hauptunterschied zum Profil 1 gemäß der Ausführungsform in Fig. 1 besteht darin, dass die Dicke der äußeren Schicht 6 hier etwa 2/3 der Gesamtwanddicke, also ca. 1,5 bis 2,0mm, beträgt und die äußere Schicht 6 aus Neumaterial besteht. Die innere Schicht 7 besteht aus Kernmaterial. Einzelne Außenwände und kleinere Profilsegmente sowie Innenwände 4 sind auch hier einschichtig aufgebaut. Beim eingebauten Fenster sind diese wieder der Mauer zugewandt bzw. befinden sich im Inneren des Profils und sind daher nicht mehr einsehbar.

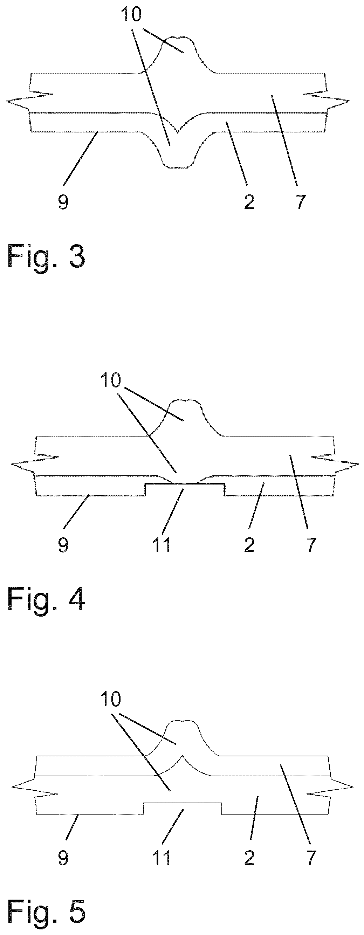

Wie oben erwähnt, ist die Forderung nach einer größeren Dicke der äußeren Schicht 6 durch das Eckenschweißen begründet. Beim Verschweißen werden die Profile 1 im Gehrungsbereich über die Schmelztemperatur hinaus erwärmt und dann gegeneinandergedrückt, wobei die beiden Rahmenschenkel um jeweils ca. 1,5mm verkürzt werden. An der Sichtfläche entsteht ein Schweißwulst 10 (siehe Fig. 3), welcher entfernt wird, so dass eine etwa 4mm breite und 0,5mm tiefe Schattenfuge 11 (siehe Fig. 4, 5) entsteht. Wird in der Schattenfuge 11 das Kernmaterial freigelegt, so kann das eine Qualitäts-Beeinträchtigung darstellen, wie im Folgenden erläutert wird.

In Fig. 3 ist ein Schweißwulst 10 im Querschnitt dargestellt, der nach dem Eckenschweißen einer zwei-schichtigen Außenwand (an der inneren Sichtfläche 9) des Profils entsteht. Die betreffende Außenwand ist in der Fig. 1 unten dargestellt, sie weist bei einem in einer Hauswand eingebautem Fenster ins Freie. Der Schweißwulst 10 ist im Wesentlichen um zwei in der Fig. 3 nicht dargestellte Achsen, vertikal und horizontal verlaufend, symmetrisch. Beim Verschweißen werden die beiden Rahmenschenkel gegeneinander um ca. 1,5mm verschoben, so dass das überschüssige, zähflüssige Material vom Wandinneren nach außen verdrängt wird und an beiden Seiten den Schweißwulst 10 bildet. Wird die Verdrängung ins Profilinnere durch eine rechtwinkelig abgehende Innenwand 4 (siehe Fig. 1) behindert, dann wird mehr Material nach außen verdrängt, der äußere Wulst wird dann größer als der innere.

Nachdem die vier Schweißnähte des rechteckigen Rahmens abgekühlt sind, wird der Schweißwulst entfernt.

In einer Maschine werden alle Schweißnähte "geputzt", d.h. der Schweißwulst 11 wird entfernt. An den beiden Sichtflächen wird in der Gehrungsebene ein Span abgezogen, so dass die Schattenfuge 11 entsteht, was in Fig. 4 dargestellt ist.

Wie in Fig. 4 zu sehen ist, wird durch die Schattenfuge 11 die Trennschicht zwischen Neumaterial 2 und Kernmaterial 7 angeschnitten, so dass auch das Kernmaterial 7 direkt außen zu liegen kommt und sichtbar ist. Da das Kernmaterial 7 sowohl in der Farbe als auch bei der Beständigkeit gegen Umwelteinflüsse größere Unterschiede zum Neumaterial 2 aufweisen kann, ist das unerwünscht, z.B. bei Farbabweichungen. Manchmal werden sogar erforderliche Eigenschaftswerte (z.B. Beständigkeit gegen Umwelteinflüsse, Langzeit-Stabilität) nicht zuverlässig eingehalten.

Wird an den Sichtflächen 8, 9 die Schichtdicke der äußeren Schicht aus dem Neumaterial 2 dicker ausgeführt, also größer als 50%, bevorzugt ca. 60 bis 70% der Gesamtwanddicke, siehe Fig. 5, dann wird mit hoher Sicherheit beim Entfernen des Schweißwulstes 10 das Kernmaterial nicht angeschnitten. Die Qualität des Fensters ist damit hochwertiger, weil weder Farbunterschiede den visuellen Eindruck stören, noch wird das Kernmaterial durch die Umwelteinflüsse geschädigt, so dass auch Brüche nach langer Einsatzdauer, 20 Jahre und mehr, sicher vermieden werden.

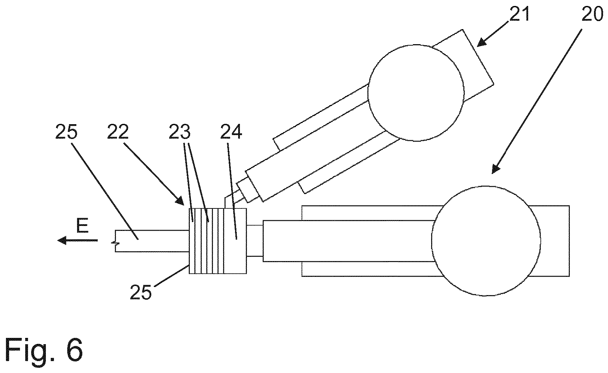

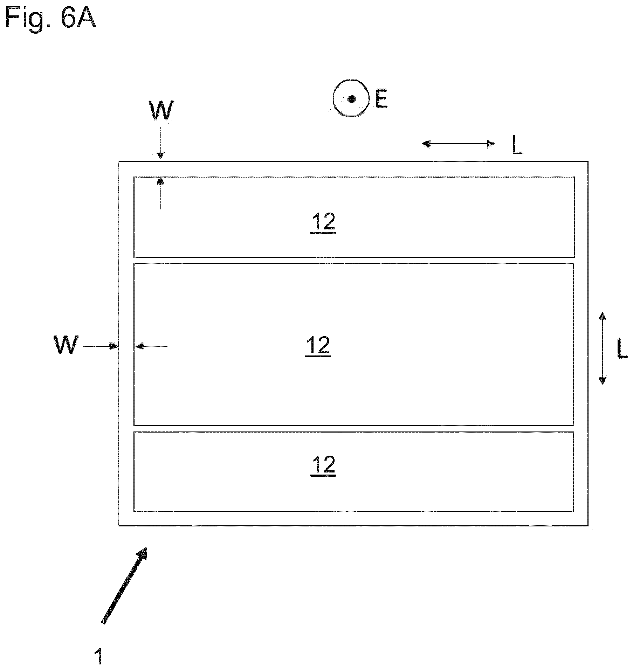

Fig. 6 zeigt eine an sich bekannte Anordnung von Hauptextruder 20, Coextrusionsvorrichtung 21 und Düsenvorrichtung 22.

Der Hauptextruder 20 ist coaxial zur gesamten Nachfolge der Extrusionslinie ausgerichtet und dient zur Aufbereitung der Komponente, welche am jeweiligen Profil 1 den größeren Anteil hat. In einem Winkel von etwa 30° steht schräg dazu die Coextrusionsvorrichtung 21, welche für die Aufbereitung der anderen Komponente eingesetzt wird.

Beide Extruder 20, 21 fördern die aufbereitete PVC-Schmelze in die Düsenvorrichtung 22, d.h. zunächst in eine Düsen-Eingangsplatte 24. Die Düsenvorrichtung 22 weist hier mehrere Düsenplatten 23 auf, die senkrecht zur Extrusionsrichtung E angeordnet sind.

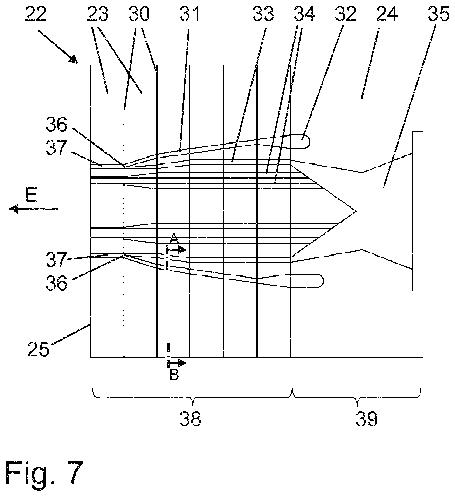

Je nach Ausführung von Zuführkanälen 32, 35(siehe Fig. 7) in der Düsen-Eingangsplatte 24 kann prinzipiell jeder der Extruder 20, 21 die Kernrezeptur für die Innenwände 4, die Innenseite der drei coextrudierten Außenwände 7 sowie der Außenwände 3 und einiger anderer Profilsegmente 3 verarbeiten. In der dargestellten Ausführungsform erfolgt dies durch den Hauptextruder 20.

Prinzipiell ist es in dieser Düsen-Eingangsplatte 24 auch möglich, durch eine Änderung der Zuführkanäle 32, 35 die Zuordnung der beiden PVC-Materialen auf die beiden Extruder 20, 21 zu tauschen. Falls das Neumaterial durch den Hauptextruder 20 aufbereitet wird, ist es zweckmäßig anstelle einer einzigen Düsen-Eingangsplatte 24 diese zweiteilig auszuführen.

Die Coextrusionsvorrichtung 21 muss nicht niveaugleich mit dem Hauptextruder 20 angeordnet sein. Er kann auch schräg oberhalb von diesem angeordnet sein und speist dann von oben in die Düsen-Eingangsplatte 24 hinein.

Es hat sich herausgestellt, dass bekannte Extrusionsvorrichtungen nicht dazu verwendet werden können, auf dem Profil 1 außen eine dickere Schicht 6 mit ca. 2mm und innen die Schicht 7 mit ca. 1mm oder etwas weniger auszuführen. Es wurde festgestellt, dass bei derartigen Coex-Profilen mit einer zu geringen Längenquellung und/oder einer zu hohen Wandstärkenquellung zu rechnen ist. Insbesondere verschlechtert sich das Verhältnis von Wandstärkenquellung zu Längenquellung auf Werte von deutlich über 1,2.

Unter Quellung (im englischen auch als Swell bezeichnet) wird hier eine Eigenschaft der Schmelzelastizität verstanden, die eine Eigenschaft von Polymerschmelzen ist. Wenn z.B. eine Polymerschmelze bei einer niedrigen Reynolds-Zahl aus einem zylindrischen Rohr extrudiert wird, hat das austretende Profil einen Durchmesser, der deutlich größer ist als das Austrittprofil der Düsenvorrichtung; das Profil weitet sich auf Grund der Anpassung des Geschwindigkeitsprofils aus.

Diese Quellung wird durch die Entspannung von Normalspannungen verursacht, die quer zur Richtung der Scherung liegen. Diese Normalspannungen drücken gegen die Wandungen der Fließkanäle 31, 33 und des gemeinsamen Fließkanals 37. Nach dem Austritt aus der Düsenvorrichtung 22 kann sich das Polymer entspannen und des dehnt sich aus.

Bei Hohlkammerprofilen 1, um die es hier geht, ist die Quellung ein zwei-dimensionaler Effekt, da die Längenquellung L (Quellung der Längen einzelner Wände) sich anders ausbildet als die Wandstärkenquellung W (Quellung der Profilwände in der Dicke).

Dies ist in Fig. 6A schematisch für ein stark vereinfachtes Profil 1, ohne coextrudierte Schichten, dargestellt, wobei die Schnittansicht senkrecht zur Extrusionsrichtung E geführt wird.

Das freie Verlassen des Profils 1 aus der Düsenvorrichtung 22 wird bei einem Test beim Feinabstimmen einer Düsenvorrichtung 22 verwendet: Noch bevor das Profil 1 durch eine Kalibrierung (hier nicht dargestellt) geführt wird, werden kurze Schmelzestücke, Länge ca. 20mm, an der Stirnfläche der Düsenvorrichtung 22 mit einer breiten Spachtel abgestochen, und bei Raumtemperatur luftgekühlt. Alle Wände sind im Idealfall länger und dicker im Vergleich zu einem kalibrierten normal abgezogen Profilabschnitt.

Die Ursache ist darin zu sehen, dass das Neumaterial, welches im stromabwärts gelegenen Bereich des formgebenden Abschnittes 38 der Düse zugeführt wird, zu wenig Zeit hatte zu relaxieren und sich noch deutlich an die dickere Form im Zuführkanal 32"erinnerte" und bestrebt war, diese Form wieder näherungsweise einzunehmen. Die dickere Coexschicht hat einen stärkeren Einfluss auf die Gesamt-Quellung als die dünnere. Dieses Quellverhalten gilt natürlich auch für die Coex-Außenwände mit dünner Außenschicht nach Fig. 1: Das Quellverhalten der dickeren Innenschicht dominiert auch hier die Gesamtquellung. Diese Quellung ist aber vergleichsweise gering, weil die Schmelze bereits längere Zeit durch einen langen Fließkanal 33 mit geringen Spaltdickenänderungen geflossen ist und die Erinnerung an den Fließquerschnitt im Zuführkanal 34 deutlich abgeklungen ist.

Das PVC-Material tritt bei Temperaturen zwischen 190 und 210 °C aus der Düsenvorrichtung 22 aus. Der Druckabfall zum Austritt beträgt zwischen 250 und 450 bar, insbesondere zwischen 300 und 390 bar. Die PVC-Schmelze hat in diesem Bereich eine Schmelzegeschwindigkeit von 1 bis 6m/min, insbesondere von 2,5 bis 5m/min.

Das Aufbringen einer relativ dicken Außenschicht ist mit einer Ausführungsform möglich, die in Fig. 7 dargestellt ist. Hier werden sowohl das Neumaterial für die äußere Schicht 6 als auch das Kernmaterial für die innere Schicht 7 bereits im Einlaufbereich der Düse 39 zugeführt.

Es gibt somit einen ersten Fließkanal 31 für ein erstes thermoplastisches Material und einen zweiten Fließkanal 33 für ein zweites thermoplastisches Material, wobei die Fließkanäle 31, 33 bis zu einer Zusammenführung 36 getrennt im Inneren der Düsenvorrichtung 22 angeordnet sind und die Fließkanäle 31, 33 in Extrusionsrichtung E nach der Zusammenführung 36 einen gemeinsamen Fließkanal 37 bilden.

Für beide Schichten 6, 7 steht somit ein langer, formgebender Abschnitt der Düse 38 zur Verfügung, in welchem nur mehr geringe Änderungen bei der Spalthöhe der beiden Fließkanäle 31, 33 vorgenommen werden müssen. Beide Materialien haben daher ausreichend Zeit zum Relaxieren, so dass innere Spannungen weitgehend abklingen können. Das Resultat ist, dass alle Wandbereiche der Außenwände eine ähnliche Quellung aufweisen, so dass in den Kantenbereichen des Profils 1 keine Welligkeiten und Glanzunterschiede auftreten.

So kann der axiale Abstand der Zusammenführung 36 der Fließkanäle 31, 33 vom Austritt des Profils 1 weniger als 12% der axialen Länge der Düsenvorrichtung 22 der Düse betragen. Dies bedeutet, dass die Zusammenführung der Fließkanäle 31, 33 relativ nahe am Düsenaustritt angeordnet ist. Auch können die Längen der Fließkanäle 31, 33 mehr als die Hälfte der axialen Länge (gemessen in Extrusionsrichtung E) der Düsenvorrichtung 22 betragen. Dabei kann die Länge insbesondere die axiale Länge sein, d.h. die Länge projiziert auf die Achse der Extrusionsrichtung. In jedem Fall soll sichergestellt werden, dass im Polymermaterial auf Grund der Länge der Fließgeschichte eine definierte Schervorgeschichte enthalten ist.

Dabei ist die Zusammenführung 36 der Fließkanäle 31, 33 innerhalb der Düsenvorrichtung 22 so ausgebildet, das am Austritt des gemeinsamen Fließkanals 37 aus der Düsenvorrichtung 22 ein Verhältnis von Wandstärkenquellung W zu Längenquellung L von 1,01 bis 1,3, vorzugsweise 1,1 vorliegt. Dies bedeutet, dass Wandstärkenquellung W etwas größer ist als die Längenquellung L.

Der in Fig. 7 beschriebene Verlauf der Fließkanäle 31, 33 erlaubt unterschiedliche Dicken der Außenschicht, bevorzugt im Bereich von 25 bis 70% der Gesamtwanddicke. Mit diesem Verlauf der Fließkanäle 31, 33 können daher beide Profilformen nach Fig. 1 und 2 extrudiert werden, problemlos also auch die dünne Außenschicht 6 im Falzbereich des Profils nach Fig. 1.

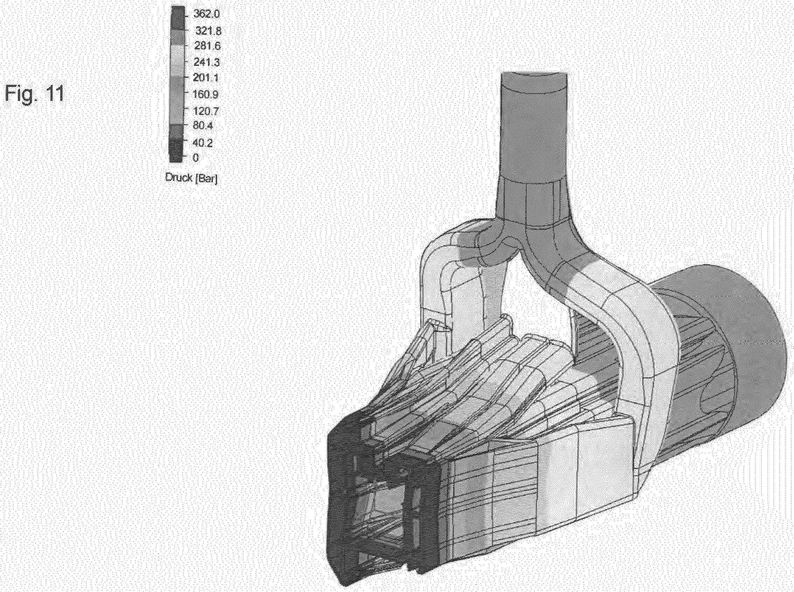

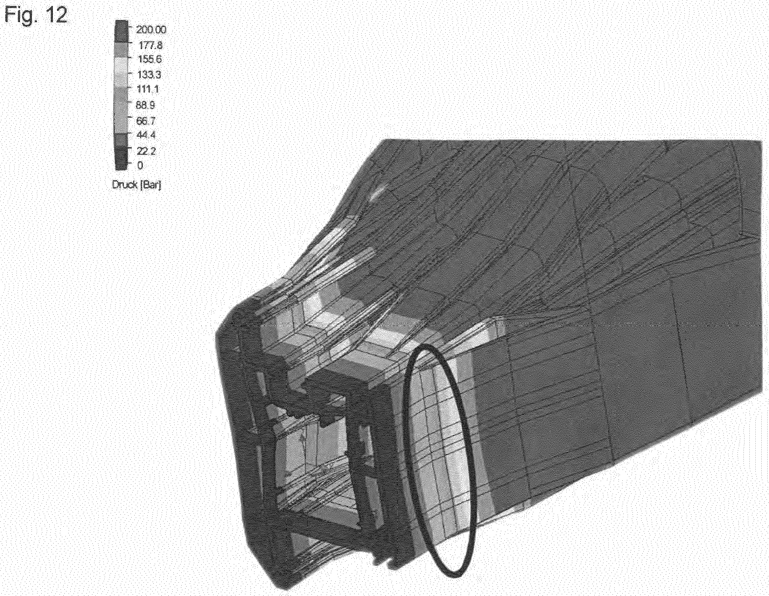

In den Fig. 11 und 12 wird in einer anderen Ausführungsform die räumliche Anordnung der Fließkanäle 31, 33 deutlich dargestellt.

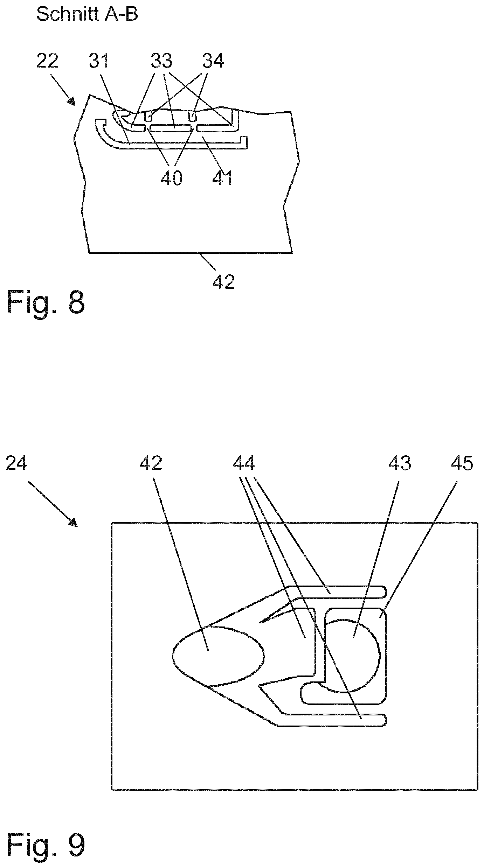

In Fig. 8 ist eine Schnittansicht gegen die Extrusionsrichtung der Düse nach Fig. 7 dargestellt. Die Schnittführung A-B ist in Fig. 7 eingezeichnet. Die beiden Fließkanäle 31, 33 werden weiter stromabwärts beider Zusammenführung 36 zu einem gemeinsamen Fließkanal 37 zusammengeführt, wobei die beiden Fließkanäle 31, 33 leicht schräg zur Extrusionsrichtung E und auch leicht konisch verlaufen.

Der erste Fließkanal 31 kann z.B. 5 bis 50°, insbesondere 10 bis 25° gegenüber der der Extrusionsrichtung geneigt sein. Der Winkel wird von der Zusammenführung 36 ausgehend bestimmt.

Der Fließkanal 31 für die äußere Schicht aus Neumaterial ist über die gesamte Breite durchgehend. Der Fließkanal 33 für die innere Schicht aus Kernmaterial ist durch zwei Haltestege 40 unterbrochen.

Der durchgehende Fließkanal 31 führt zu einer einheitlichen Oberfläche der Außenschicht an den Sichtflächen 8, 9 des Profils 1. Unregelmäßigkeiten im Fließkanal 31 in Form von Haltestege oder Kanten sollten weitgehend vermieden werden, weil sich diese, sogar wenn sie weiter stromaufwärts in der Düsenvorrichtung 22 liegen, unweigerlich als Glanzstreifen oder als eine leichte Welligkeit auf einer Oberfläche des Profils 1 abzeichnen.

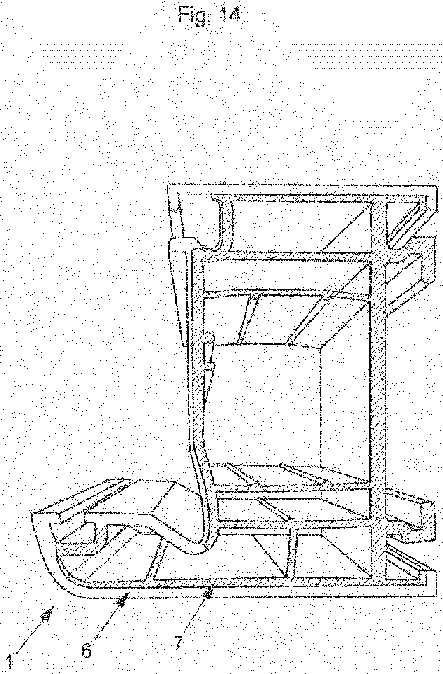

Ist zur Reduktion von Querströmungen doch eine Unterteilung im Fließkanal 31 erforderlich, so ist diese nicht im Bereich eines ebenen Wandabschnittes vorzusehen, sondern an einer Stelle, an der die Außenwand einen Knick mit einem eher kleinen Abrundungsradius aufweist (siehe auch Fig. 14).

Die der Hohlkammer 12 zugewandte Fläche der Coex-Außenwand ist bezüglich Oberflächenqualität weniger anspruchsvoll, so dass der zugehörige Fließkanal 33 für die innere Schicht ohne weiteres durch Haltestege 40 unterbrochen werden kann. Diese Haltestege 40 dienen dazu, um die relativ dünne Trennwand 41 zwischen den beiden Fließkanälen 31, 33 statisch zu stabilisieren.

In der Düsenvorrichtung 22 treten erhebliche Massedrücke bis etwa 450bar auf. Insbesondere beim Anfahren und Abstellen der Extrusionslinie tritt die Situation auf, dass ein Extruder Material fördert und der andere nicht. D.h. in einem Fließkanal steht bereits ein erheblicher Massedruck an und im daneben liegenden Fließkanal ist dieser nahezu Null. Große Druckunterschiede an beiden Seiten der Trennwand 41 von 100bar und mehr stellen erhöhte Anforderungen an die mechanische Stabilität der Düsenvorrichtung 22. Im vorliegenden Fall wird das Verbiegen der Trennwand 41 durch die beiden Haltestege 40 verhindert. Die Kräfte werden in den Kernbereich der Düsenvorrichtung 22 abgleitet, wofür in den weiteren, innenliegenden Fließkanälen entsprechende Haltestege vorgesehen sind. Hin zur Außenfläche 42 der Düsen ist die Stabilität in jedem Fall ausreichend, weil der Abstand der Fließkanäle zur Außenfläche immer mehr als 30mm beträgt.

Der Verlauf der Fließ- und Zuführkanäle 31, 32, 33, 34, 35 ist hier jeweils für einen zwei-schichtigen Aufbau von coextrudierten Außenwänden 5 beschrieben. Dieser prinzipielle Verlauf der Fließkanäle kann selbstverständlich auch bei drei- und mehrschichtigen Coex-Wänden angewendet werden.

Fig. 9 zeigt eine Stirnansicht der Düsen-Eingangsplatte 24 gegen die Extrusionsrichtung E für den Fall "Neumaterial aus der Coextrusionsvorrichtung 21", wie oben beschrieben. In Fig. 6 ist dargestellt, dass die Coextrusionsvorrichtung 21 seitlich in die Düsenvorrichtung 22 hineinfördert. Ein runder Anspeisekanal 42 verläuft in der Düsen-Eingangsplatte 24 horizontal und leicht schräg zu deren Stirnfläche. In die Stirnfläche der Düsenvorrichtung 22 hinein versenkt sind drei Zuführkanäle 44, welche die Fließkanäle 31 für das Neumaterial für die äußeren Schichten und einige kleine Profilsegmente versorgen. Das Neumaterial aus der Coextrusionsvorrichtung 21 fließt zunächst durch den Anspeisekanal 42, dann durch die Zuführkanäle 44 und schließlich in die Fließkanäle 31, welche in Fig.9 nicht dargestellt sind. Diese Fließkanäle 31 ragen aus der Bildebene senkrecht hervor.

Das Kernmaterial fließt vom Hauptextruder 20 durch den Anspeisekanal 43 und wird durch schrägverlaufende Wandungen zu einem L-förmigen Querschnitt des Zuführkanals 45 verformt. In diesen L-förmigen Abschnitt ragt die Kernspitze hinein. Die Fließkanäle 33, 34 für das Kernmaterial ragen wiederum aus der Bildebene hervor und schließen ohne Absatz an die Außenkontur 45 und die Kontur der Kernspitze an, was in Fig. 9 gut erkennbar ist.

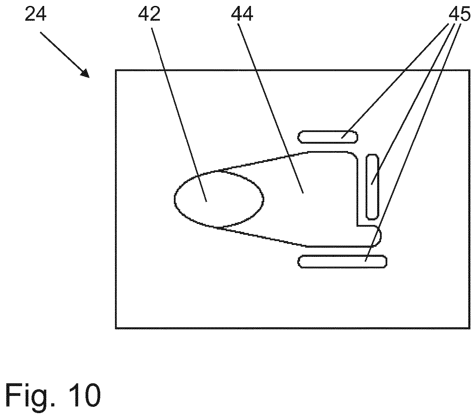

Fig. 10 zeigt eine Stirnansicht der Düsen-Eingangsplatte 24 gegen die Extrusionsrichtung E für den Fall Kernmaterial aus der Coextrusionsvorrichtung 21. Auch in diesem Fall fördert die Coextrusionsvorrichtung 21 seitlich in die Düsenvorrichtung 22 hinein, in diesem Fall allerdings das Kernmaterial.

Der runde Anspeisekanal 42 verläuft wiederum in der Düsen-Eingangsplatte 24 zunächst horizontal und leicht schräg zu deren Stirnfläche. In die Stirnfläche der Düsenvorrichtung 22 hinein versenkt ist ein Zuführkanal 44, welcher die Fließkanäle 33, 34 für die inneren Schichten und den Kernbereich des Profils 1 verbindet.

Zu beachten ist, dass hier das Profil 1 spiegelbildlich um eine vertikale Fläche angeordnet ist, der Überschlag des Rahmenprofils ist also auf der rechten Seite der Darstellung. Das Kernmaterial aus der Coextrusionsvorrichtung 21 fließt zunächst durch den Anspeisekanal 42, dann durch den Zuführkanal 44 und schließlich in die Fließkanäle 33, 34 für die inneren Schichten der Coex-Bereiche, die Innenwände und einige kleine Profilsegmente, welche in Fig. 9 nicht dargestellt sind. Diese Fließkanäle 33, 34 ragen aus der Bildebene senkrecht hervor und werden hier "stumpf" beaufschlagt.

Das Neumaterial aus dem Hauptextruder 20 wird in einer oder zwei weiteren Düsenplatten, welche einlaufseitig an die gezeigte Düsen-Eingangsplatte 24 anschließen und hier nicht dargestellt sind, ausgehend von einem runden Anspeisekanal auf die drei Zuführkanäle 45 aufgeteilt. Das Kernmaterial fließt also zunächst in einem runden Anspeisekanal in Extrusionsrichtung E, wird in zwei oder drei Düsenplatten in konisch verlaufenden Kanälen auf drei näherungsweise rechteckige Zuführkanäle 45 aufgeteilt und fließt dann in den Fließkanälen 31 näherungsweise in Extrusionsrichtung E durch den formgebenden Abschnitt 38 der Düsenvorrichtung

In Fig. 11 und 12 sind die Druckverhältnisse bei der Zusammenführung der Fließkanale 31, 33 in einer drei-dimensionalen Darstellung wiedergegeben. Diese Darstellung ergänzt die Darstellung der Fig. 7, wobei auf die entsprechende Beschreibung Bezug genommen werden kann.

Dargestellt ist die Ansicht von vorne auf die Stirnseite 25 der Düse. Die Extrusionsrichtung E ist eingezeichnet.

Die Fließkanäle 31, 33 sind hier an der rechten Seite der Düse dargestellt. Die Zusammenführung erfolgt unter einem Winkel von 5 bis 50°, insbesondere im Bereich von 10 bis 25°.

Der Bereich der Zusammenführung 36 der Fließkanäle 31, 32 ist in Fig. 12 vergrößert dargestellt und durch eine Umrahmung hervorgehoben. Der der axiale Abstand der Zusammenführung 36 der Fließkanäle 31, 32 vom Austritt des Profils beträgt weniger als 12% der axialen Länge der Düsenvorrichtung 22 beträgt.

Im Bereich der Zusammenführung 36 herrscht ein Druck von ca. 65 bar. Erfolgt die Zusammenführung 36 axial etwas weiter hinten, beträgt der Druck ca. 175 bar.

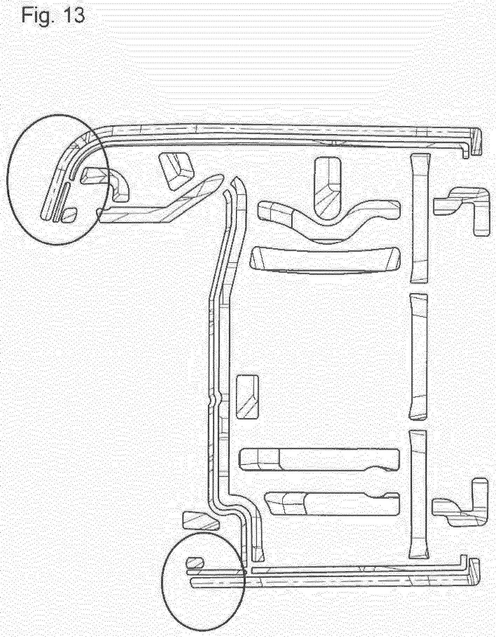

In Fig. 13 eine Schnittansicht durch ein Profil dargestellt, bei dem der mindestens eine erste Fließkanal für das erste thermoplastische Material an den ebenen Sichtflächen nicht unterteilt ist, außer an Profilkonturecken (siehe Hervorhebungen).

In Fig. 14 ist ein Schnitt durch ein Extrusionsprofil 1 dargestellt, bei dem die Schichten 6, 7 gut erkennbar sind. Die Schicht 7 aus Kernmaterial ist dunkler als die Schicht 6 aus Neumateiral.

### Bezugszeichenliste

1 Profil
2 Außenwände aus hochwertiger Rezeptur, auch Neumaterial genannt
3. Außenwände aus preiswerter Rezeptur, auch Kernmaterial genannt
4 Innenwände aus Kernmaterial
6 Äußere Schicht aus Neumaterial
7 Innere Schicht aus Kernmaterial
8 Innere Sichtfläche
9 Äußere Sichtfläche
10 Schweißwulst
11 Schattenfuge
12 Hohlkammer
20 Hauptextruder
21 Coextrusionsvorrichtung
22 Düsenvorrichtung
23 Düsenplatten
24 Düsen-Eingangsplatte
25 Stirnseite Düsenvorrichtung (Austritt Profil)
31 Erster Fließkanal für das Neumaterial (äußere Schicht)
32 Zuführkanal für das Neumaterial
33 Zweiter Fließkanal für das Kernmaterial (innere Schicht)
34 Fließkanal für das Kernmaterial (Innenwände)
35 Zuführkanal für das Kernmaterial
36 Zusammenführung von äußerer und innerer Schicht
37 Gemeinsamer Fließkanal für Neu- und Kernmaterial
38 Formgebender Abschnitt der Düse
39 Einlaufbereich der Düse
40 Haltesteg
41 Trennwand zwischen zwei Fließkanälen
42 Mündung des runden Anspeisekanals von Coextrusionsvorrichtung
43 Mündung des runden Anspeisekanals vom Hauptextruder
44 Zuführkanäle für die Fließkanäle 31
45 Zuführkanal für die Fließkanäle 33 und 34
E Extrusionsrichtung
L Längenquellung
W Wandstärkenquellung

## Patentansprüche

1. Extrusionsvorrichtung für die Coextrusion von PVC-Profilen mit mindestens zwei Hohlkammern, insbesondere Fensterprofilen, wobei die Extrusionsvorrichtung eine Düsenvorrichtung (22) mit mindestens einem ersten Fließkanal (31) für ein erstes thermoplastisches Material und mindestens einemzweiten Fließkanal (33) für ein zweites thermoplastisches Material aufweist, die Fließkanäle (31, 33) bis zu einer Zusammenführung (36) getrennt im Inneren der Düsenvorrichtung (22) angeordnet sind und die Fließkanäle (31, 33) in Extrusionsrichtung (E) nach der Zusammenführung (36) einen gemeinsamen Fließkanal (37) bilden,
wobei ein erster Fließkanal (31) für Neumaterial eine Länge, insbesondere axiale Länge der Fließkanäle, von mehr als der Hälfte der axialen Länge der Düsenvorrichtung (22) aufweist und der axiale Abstand der Zusammenführung (36) der Fließkanäle (31, 33) vom Austritt des Profils (1) weniger als 12% der axialen Länge der Düsenvorrichtung (22) beträgt, **dadurch gekennzeichnet,**
**dass** die Spalthöhe des ersten Fließkanals (31) für Neumaterial im Bereich der Zusammenführung der beiden Fließkanäle an den Sichtflächen (8, 9) größer ist als die Spalthöhe des zweiten Fließkanals in diesem Bereich.

2. Extrusionsvorrichtung nach Anspruch 1, **dadurch gekennzeichnet, dass** die Zusammenführung (36) der Fließkanäle (31, 33) so ausgebildet ist, dass an einem Düsenaustritt (25) des gemeinsamen Fließkanals (37) aus der Düsenvorrichtung (22) ein Verhältnis von Wandstärkenquellung (W) zu Längenquellung (L) von 1,01 bis 1,3, vorzugsweise 1,1 vorliegt.

3. Extrusionsvorrichtung nach Anspruch 1 oder 2, **dadurch gekennzeichnet, dass** der mindestens eine Fließkanal (31) für das erste thermoplastische Material und der mindestens eine Fließkanal (33) für das zweite thermoplastische Material in einem Abstand zwischen 20 bis 50 mm vor einer Düsenstirnfläche (25) zu dem mindestens einen gemeinsamen Fließkanal (37) für das erste und das zweite thermoplastische Material zusammengeführt werden.

4. Extrusionsvorrichtung nach einem der vorhergehenden Ansprüche, **dadurch gekennzeichnet, dass** der mindestens eine erste Fließkanal (31) für das erste thermoplastische Material an den ebenen Sichtflächen (8, 9) nicht unterteilt ist, außer an Profilkonturecken.

5. Extrusionsvorrichtung nach einem der vorhergehenden Ansprüche, **dadurch gekennzeichnet, dass** ein Düseneinlaufbereich (39) mit mindestens einem Hauptextruder (20) und einer Coextrusionsvorrichtung (21) verbunden sind.

6. Extrusionsvorrichtung nach mindestens einem der vorhergehenden Ansprüche, **dadurch gekennzeichnet, dass** die mittlere Neigung des ersten Fließkanals (31) zur Extrusionsrichtung (E) 5 bis 50°, insbesondere 10 bis 25° beträgt.

7. Verwendung einer Extrusionsvorrichtung nach mindestens einem der vorhergehenden Ansprüche, **dadurch gekennzeichnet, dass** als die beiden thermoplastischen Materialien PVC-Materialien mit unterschiedlichen Zusammensetzungen eingesetzt werden..

8. Extrusionsverfahren für die Coextrusion von PVC-Profilen mit mindestens zwei Hohlkammern, insbesondere Fensterprofilen,
- bei dem ein erstes thermoplastisches Material in mindestens einem Fließkanal (31) in einer Düsenvorrichtung (22) geführt wird; und
- ein zweites thermoplastisches Material in mindestens einem zweiten Fließkanal (33) der Düsenanordnung (22) geführt wird,
- wobei das erste thermoplastische Material aus dem mindestens einen ersten Fließkanal (31) und das zweite thermoplastische Material aus dem mindestens einen zweiten Fließkanal (33) an einer Zusammenführung (36) in einen gemeinsamen Fließkanal (37) zusammengeführt werden, so dass das aus der Düsenanordnung (22) austretende Profil (1) Schichten des ersten thermoplastischen Materials und des zweiten thermoplastischen Materials aufweist, und
- in einem ersten Fließkanal (31) für Neumaterial das Material über eine Länge, insbesondere axiale Länge der Fließkanäle, von mehr als der Hälfte der axialen Länge der Düsenvorrichtung (22) geführt wird und eine Zusammenführung (36) des in den Fließkanälen (31, 33) geführten Materials weniger als 12% der axialen Länge der Düsenvorrichtung (22) vom Austritt gemessen erfolgt, **dadurch gekennzeichnet, dass** die Spalthöhe des ersten Fließkanals (31) für Neumaterial im Bereich der Zusammenführung der beiden Fließkanäle an den Sichtflächen (8, 9) größer ist als die Spalthöhe des zweiten Fließkanals in diesem Bereich.

9. Extrusionsverfahren nach Anspruch 8, **dadurch gekennzeichnet, dass** das erste thermoplastische Material und das zweite thermoplastische Material aus zwei unterschiedlichen Polyvinylchlorid (PVC)-Rezepturen bestehen.

10. Extrusionsverfahren nach Anspruch 8 oder 9, **dadurch gekennzeichnet, dass** das Profil (1) am Austritt aus der Düsenvorrichtung (22) eine Temperatur zwischen 190 und 210 °C aufweist.

11. Extrusionsverfahren nach mindestens einem der Ansprüche 8 bis 10, **dadurch gekennzeichnet, dass** der Druckabfall zum Austritt des Profils zwischen 250 und 450 bar, insbesondere zwischen 300 und 390 bar liegt.

12. Extrusionsverfahren nach mindestens einem der Ansprüche 8 bis 11, **dadurch gekennzeichnet, dass** die Schmelzegeschwindigkeit der Polymerschmelze des Profils (1) am Austritt zwischen 1 und 6m/min, insbesondere zwischen 2,5 und 5m/min liegt.

13. Extrusionsverfahren nach mindestens einem der Ansprüche 8 bis 12, **dadurch gekennzeichnet, dass** auf Außenwände des Profils (1) zumindest teilweise zwei Schichten (6, 7) aufgebracht werden, wobei die Dicke der äußeren Schicht (6) an den Sichtflächen (8, 9) mindestens 50% der Gesamtwanddicke beträgt.

14. Extrusionsverfahren nach mindestens einem der Ansprüche 8 bis 13, **dadurch gekennzeichnet, dass** am Düsenaustritt (25) des gemeinsamen Fließkanals (37) aus der Düsenvorrichtung (22) ein Verhältnis von Wandstärkenquellung zu Längenquellung von 1,01 bis 1,3, insbesondere 1,1, vorliegt.

## Claims

1. An extrusion device for the coextrusion of PVC profiles with at least two hollow chambers, in particular window profiles, wherein the extrusion device includes a nozzle device (22) with at least one first flow channel (31) for a first thermoplastic material and at least one second flow channel (33) for a second thermoplastic material, the flow channels (31, 33) are separately arranged in the interior of the nozzle device (22) up to a junction (36), and after the junction (36) the flow channels (31, 33) form a common flow channel (37) in the extrusion direction (E),
wherein a first flow channel (31) for new material has a length, in particular axial length of the flow channels, of more than half the axial length of the nozzle device (22), and the axial distance of the junction (36) of the flow channels (31, 33) from the outlet of the profile (1) is less than 12% of the axial length of the nozzle device (22),
**characterized in that** the gap height of the first flow channel (31) for new material in the area of the junction of the two flow channels at the visible surfaces (8, 9) is greater than the gap height of the second flow channel in this area.

2. The extrusion device according to claim 1, **characterized in that** the junction (36) of the flow channels (31, 33) is formed such that at a nozzle outlet (25) of the common flow channel (37) from the nozzle device (22) a ratio of wall thickness swelling (W) to length swelling (L) of 1.01 to 1.3, preferably 1.1 is present.

3. The extrusion device according to claim 1 or 2, **characterized in that** the at least one flow channel (31) for the first thermoplastic material and the at least one flow channel (33) for the second thermoplastic material are joined at a distance between 20 to 50 mm in front of a nozzle face (25) to form the at least one common flow channel (37) for the first and the second thermoplastic material.

4. The extrusion device according to any of the preceding claims, **characterized in that** the at least one first flow channel (31) for the first thermoplastic material is not divided at the flat visible surfaces (8, 9), except at profile contour corners.

5. The extrusion device according to any of the preceding claims, **characterized in that** a nozzle inlet region (39) is connected to at least one main extruder (20) and to a coextrusion device (21).

6. The extrusion device according to at least one of the preceding claims, **characterized in that** the mean inclination of the first flow channel (31) to the extrusion direction (E) is 5 to 50°, in particular 10 to 25°.

7. Use of an extrusion device according to at least one of the preceding claims, **characterized in that** PVC materials with different compositions are used as the two thermoplastic materials.

8. An extrusion method for the coextrusion of PVC profiles with at least two hollow chambers, in particular window profiles,
- in which a first thermoplastic material is guided in at least one flow channel (31) in a nozzle device (22); and
- a second thermoplastic material is guided in at least one second flow channel (33) of the nozzle arrangement (22),
- wherein the first thermoplastic material from the at least one first flow channel (31) and the second thermoplastic material from the at least one second flow channel (33) are joined into a common flow channel (37) at a junction (36), so that the profile (1) exiting from the nozzle arrangement (22) includes layers of the first thermoplastic material and of the second thermoplastic material, and
- in a first flow channel (31) for new material the material is guided along a length, in particular axial length of the flow channels, of more than half the axial length of the nozzle device (22), and a junction (36) of the material guided in the flow channels (31, 33) is effected along less than 12% of the axial length of the nozzle device (22) as measured from the outlet,
**characterized in that** the gap height of the first flow channel (31) for new material in the area of the junction of the two flow channels at the visible surfaces (8, 9) is greater than the gap height of the second flow channel in this area.

9. The extrusion method according to claim 8, **characterized in that** the first thermoplastic material and the second thermoplastic material consist of two different polyvinyl chloride (PVC) formulations.

10. The extrusion method according to claim 8 or 9, **characterized in that** at the outlet of the nozzle device (22) the profile (1) has a temperature between 190 and 210 °C.

11. The extrusion method according to at least one of claims 8 to 10, **characterized in that** the pressure drop towards the outlet of the profile is between 250 and 450 bar, in particular between 300 and 390 bar.

12. The extrusion method according to at least one of claims 8 to 11, **characterized in that** the melt speed of the polymer melt of the profile (1) at the outlet is between 1 and 6 m/min, in particular between 2.5 and 5 m/min.

13. The extrusion method according to at least one of claims 8 to 12, **characterized in that** two layers (6, 7) are at least partly applied to outer walls of the profile (1), wherein the thickness of the outer layer (6) at the visible surfaces (8, 9) is at least 50% of the total wall thickness.

14. The extrusion method according to at least one of claims 8 to 13, **characterized in that** at the nozzle outlet (25) of the common flow channel (37) from the nozzle device (22) a ratio of wall thickness swelling to length swelling of 1.01 to 1.3, in particular 1.1, is present.

## Revendications

1. Dispositif d'extrusion pour la coextrusion de profilés en PVC comportant au moins deux chambres creuses, en particulier des profilés de fenêtre, le dispositif d'extrusion comportant un dispositif à buses (22) comportant au moins un premier canal d'écoulement (31) pour un premier matériau thermoplastique et au moins un deuxième canal d'écoulement (33) pour un deuxième matériau thermoplastique, les canaux d'écoulement (31, 33) étant agencés séparément à l'intérieur du dispositif à buses (22) jusqu'à une jonction (36), et les canaux d'écoulement (31, 33) formant, dans la direction d'extrusion (E) après la jonction (36), un canal d'écoulement commun (37),
un premier canal d'écoulement (31) pour le matériau vierge présentant une longueur, en particulier une longueur axiale des canaux d'écoulement, supérieure à la moitié de la longueur axiale du dispositif à buses (22), et la distance axiale entre la jonction (36) des canaux d'écoulement (31, 33) à partir de la sortie du profilé (1) étant inférieure à 12 % de la longueur axiale du dispositif à buses (22),
**caractérisé en ce que** la hauteur de fente du premier canal d'écoulement (31) pour le matériau vierge, au niveau de la jonction des deux canaux d'écoulement sur les surfaces visibles (8, 9), est supérieure à la hauteur de fente du deuxième canal d'écoulement dans cette zone.

2. Dispositif d'extrusion selon la revendication 1, **caractérisé en ce que** la jonction (36) des canaux d'écoulement (31, 33) est conçue de telle sorte qu'au niveau d'une sortie de buse (25) du canal d'écoulement commun (37) issu du dispositif à buses (22), on obtienne un rapport entre le gonflement de l'épaisseur de paroi (W) et le gonflement en longueur (L) compris entre 1,01 et 1,3, de préférence égal à 1,1.

3. Dispositif d'extrusion selon la revendication 1 ou 2, **caractérisé en ce que** ledit au moins un canal d'écoulement (31) pour le premier matériau thermoplastique et ledit au moins un canal d'écoulement (33) pour le deuxième matériau thermoplastique sont réunis en l'au moins un canal d'écoulement commun (37) pour le premier et le deuxième matériau thermoplastique, à une distance comprise entre 20 et 50 mm en amont d'une face frontale de buse (25).

4. Dispositif d'extrusion selon l'une quelconque des revendications précédentes, **caractérisé en ce que** ledit au moins un premier canal d'écoulement (31) pour le premier matériau thermoplastique n'est pas subdivisé sur les surfaces planes visibles (8, 9), sauf au niveau des angles du contour de profil.

5. Dispositif d'extrusion selon l'une quelconque des revendications précédentes, **caractérisé en ce qu'**une zone d'entrée de buse (39) est reliée à au moins une extrudeuse principale (20) et à un dispositif de coextrusion (21).

6. Dispositif d'extrusion selon au moins l'une des revendications précédentes, **caractérisé en ce que** l'inclinaison moyenne du premier canal d'écoulement (31) par rapport à la direction d'extrusion (E) est comprise entre 5 et 50°, en particulier entre 10 et 25°.

7. Utilisation d'un dispositif d'extrusion selon au moins l'une des revendications précédentes, **caractérisée en ce que** les deux matériaux thermoplastiques utilisés sont des matériaux en PVC de compositions différentes.

8. Procédé d'extrusion pour la coextrusion de profilés en PVC comportant au moins deux chambres creuses, en particulier des profilés de fenêtres,
- dans lequel un premier matériau thermoplastique est guidé dans au moins un canal d'écoulement (31) dans un dispositif à buses (22) ; et
- un deuxième matériau thermoplastique est guidé dans au moins un deuxième canal d'écoulement (33) de l'ensemble de buses (22),
- le premier matériau thermoplastique provenant dudit au moins un premier canal d'écoulement (31) et le deuxième matériau thermoplastique provenant dudit au moins un deuxième canal d'écoulement (33) étant réunis au niveau d'une jonction (36) pour former un canal d'écoulement commun (37), de sorte que le profil (1) sortant de l'ensemble de buses (22) présente des couches du premier matériau thermoplastique et du deuxième matériau thermoplastique, et
- dans un premier canal d'écoulement (31) pour le matériau vierge, le matériau est guidé sur une longueur, en particulier une longueur axiale des canaux d'écoulement, supérieure à la moitié de la longueur axiale du dispositif à buses (22), et une jonction (36) du matériau guidé dans les canaux d'écoulement (31, 33) est effectuée à une distance inférieure à 12 % de la longueur axiale du dispositif à buses (22), mesurée à partir de la sortie,
**caractérisé en ce que** la hauteur de fente du premier canal d'écoulement (31) pour le matériau vierge, au niveau de la jonction des deux canaux d'écoulement sur les surfaces visibles (8, 9), est supérieure à la hauteur de fente du deuxième canal d'écoulement dans cette zone.

9. Procédé d'extrusion selon la revendication 8, **caractérisé en ce que** le premier matériau thermoplastique et le deuxième matériau thermoplastique sont constitués de deux formulations différentes de chlorure de polyvinyle (PVC).

10. Procédé d'extrusion selon la revendication 8 ou 9, **caractérisé en ce que** le profil (1) présente, à la sortie du dispositif à buses (22), une température comprise entre 190 et 210 °C.

11. Procédé d'extrusion selon au moins l'une des revendications 8 à 10, **caractérisé en ce que** la chute de pression vers la sortie du profil est comprise entre 250 et 450 bars, en particulier entre 300 et 390 bars.

12. Procédé d'extrusion selon au moins l'une des revendications 8 à 11, **caractérisé en ce que** la vitesse de fonte du polymère fondu du profil (1) à la sortie est comprise entre 1 et 6 m/min, en particulier entre 2,5 et 5 m/min.

13. Procédé d'extrusion selon au moins l'une des revendications 8 à 12, **caractérisé en ce que** deux couches (6, 7) sont appliquées, au moins partiellement, sur les parois extérieures du profil (1), l'épaisseur de la couche extérieure (6) sur les surfaces visibles (8, 9) représentant au moins 50 % de l'épaisseur totale de la paroi.

14. Procédé d'extrusion selon au moins l'une des revendications 8 à 13, **caractérisé en ce qu'**à la sortie de buse (25) du canal d'écoulement commun (37) du dispositif à buses (22), on observe un rapport entre le gonflement en épaisseur de paroi et le gonflement en longueur compris entre 1,01 et 1,3, en particulier égal à 1,1.
